# EUROPÄISCHE PATENTSCHRIFT

(11) **EP 1 095 356 B1**
(45) Veröffentlichungstag und Bekanntmachung des Hinweises auf die Patenterteilung: **20.07.2011**
(21) Anmeldenummer: 00940179.5
(22) Anmeldetag: 10.05.2000
(51) Int. Cl.: G06K 19/077, G06K 7/00

(54) **KONTAKTANORDNUNG UND GEGENKONTAKTMODUL**
CONTACT ARRANGEMENT AND COUNTER-CONTACT MODULE
AGENCEMENT A CONTACT ET MODULE A CONTACT ANTAGONISTE

(30) Priorität: 14.05.1999 DE 19922064; 09.09.1999 DE 19943060
(43) Veröffentlichungstag der Anmeldung: 02.05.2001
(73) Patentinhaber: ROBERT BOSCH GMBH, 70442 Stuttgart (DE)
(72) Erfinder: GROEGER, Klaus-Erwin, D-31199 Diekholzen (DE)
(86) Internationale Anmeldenummer: PCT/DE2000/001460
(87) Internationale Veröffentlichungsnummer: WO 2000/070553

(56) Entgegenhaltungen:
- EP-A- 0 775 964
- EP-A1- 0 887 767
- EP-A1- 0 887 767
- EP-A2- 0 716 394
- EP-A2- 0 716 394
- WO-A1-00/42568
- WO-A1-00/42568
- FR-A- 2 634 095
- US-A- 5 126 548
- US-A- 5 126 548
- PATENT ABSTRACTS OF JAPAN vol. 010, no. 254 (P-492), 30. August 1986 (1986-08-30) & JP 61 080482 A (HITACHI LTD), 24. April 1986 (1986-04-24)

## Beschreibung

### Stand der Technik

Die Erfindung geht von einem elektrisch kontaktierbaren Kontaktmodul sowie einem Gegenkontaktmodul nach den unabhängigen Patentansprüche aus.

Auf kartenförmigen Trägern angeordnete, elektrisch kontaktierbare Module sind in Form von sogenannten Chipkarten, beispielsweise als Telefon-, Eurocheque-, Krankenkassenkarten öder auch als sogenannte Key-Cards für Autoradios der Firma Blaupunkt-Werke GmbH, seit langem bekannt. Diese bestehen im wesentlichen aus mindestens einem in eine Kunststoffkarte vorgegebener Abmessungen eingebetteten Mikrochip, der als Speicher- und/oder Mikroprozessorchip ausgeführt sein kann. Bei Chipkarten gemäß der Norm ISO 7816-1 und folgende sind die Kontakte eines in die Karte eingebetteten Mikrochips mit an der Oberfläche der Karte angeordneten Kontaktflächen verbunden. Mittels in einem geeigneten Chipkartenleser vorgesehenen Gegenkontakten kann somit das in die Kunststoffkarte eingebettete Modul zum Auslesen seiner Informationen bzw. zum Informationsaustausch zwischen Modul und Chipkartenleser kontaktiert werden.

Es sind zwischenzeitlich weitere, von der Norm ISO 7816-1 und folgende abweichende Chipkarten, beispielsweise in Form der sogenannten Multi-Media-Card (MMC) der Firma Siemens bekannt geworden. Diese unterscheiden sich von denen gemäß ISO 7816-1 und folgende durch ihre von der in ISO 7816-2 festgelegten Kontaktanordnung abweichende Anordnung der Kontaktflächen.
Es sind weiter Gegenkontaktmodule zur Verwendung in Chipkartenlesern bekannt, die aufgrund ihrer Anordnung dar Gegenkontakte zur Auswertung von Chipkarten nach dem ISO 7816-Standard geeignet sind.

Aus der EP 0 887 767 A1 ist eine Chipkarte bekannt. Ein Chip ist auf einem kartenförmigen Träger angeordnet. Der Chip weist eine Mehrzahl von Kontakten auf.

Die EP 0 716 394 A2 zeigt eine ähnliche Chipkarte. Diese Chipkarten können nur mit für diese Kontaktanordnung ausgeführten Gegenkontakten gelesen werden. Wird eine Karte mit einer abweichenden Kontaktflächenanordnung in dieses Lesegerät gesteckt, kann es die andere Karte nicht lesen.

Die FR 2 634 095 zeigt eine Kontaktflächenanordnung mit zwei Kontaktbereichen, die elektrisch miteinander verbunden sind. Wenn ein universelles Lesegerät für Chipkarten geschaffen werden soll, ist auch diese Kontaktanordnung zum Lesen von unterschiedlicher Chipkarten nicht geeignet.

Aus der US 5,126, 548 ist eine Kontaktanordnung mit Kontaktflächen nach ISO 7816 und zusätzlichen Kontaktflächen für einen Hochgeschwindigkeitsdatentransfer bekannt.

EP 1 147 486 und WO 00/42568 sind relevant nach Art. 54 (3) EPÜ und offenbaren in Fig. 4, 5 und 6 eine Chipkarte mit einer Kontakt-anordnung, bei der zwei Kontaktfelder innerhalb und außerhalb eines vorgegebenen Bereichs miteinander verbunden sind.

### Vorteile der Erfindung

Die Erfindung ist in den unabhängigen Ansprüchen definiert.

Sie hat den Vorteil, dass auch solche elektrisch kontaktierbaren Module, deren Kontaktanordnung von einer vorgegebenen Kontaktflächenanordnung abweicht, in einfacher Weise an die vorgegene Kontaktflächenanordnung anpassbar ist. Damit sind auch solche Module von Standard-Auswerteeinrichtungen, die auf die vorgegebene Kontaktflächenanordnung abgestimmt sind, kontaktierbar.

Die abhängigen Ansprüche enthalten bevorzugte Ausführungsformen.

Insbesondere ermöglicht die Erfindung beispielsweise die Kontaktierung und Auswertung von bzw. Kommunikation mit den genannten Multi-Media-Cards mittels eines für Chipkarten nach dem Standard ISO 7816-1 und folgende vorgesehenen Chipkartenlesers.

Weiterhin ermöglicht die Erfindung die Kontaktierung der genannten Multi-Media-Cards sowohl mit einem ISO 7816-Chipkartenleser, als auch mit einem für Multi-Media-Cards vorgesehenen Chipkartenleser, da die Erfindung die Anpassung der Kontaktflächen der MMC-Card an den ISO 7816-Standard bei Beibehaltung der MMC-Kontaktflächenanordnung zuläßt.

Ein erfindungsgemäßes Gegenkontaktmodul ist in vorteilhafter Weise zur Kontaktierung einer erfindungsgemäßen Kontaktanordnung durch eine entsprechende Anordnung seiner Gegenkontakte ausgebildet.

Ein solches Gegenkontaktmodul ist in einfacher Weise aus einem herkömmlichen Gegenkontaktmodul zur Kontaktierung von beispielsweise ISO-7816-Kontaktanordnungen durch Anreihung eines weiteren Gegenkontaktteilmoduls herstellbar. Eine vorteilhafte Ausbildung von Mitteln zur Kaskadierung der Gegenkontaktteilmodule stellen eine in eine Seitenwand des Gegenkontaktteilmoduls eingefräste schwalbenschwanzförmige Nut, sowie eine an eine entsprechend gegenüberliegende Seitenwand des anzureihenden weiteren Gegenkontaktteilmoduls angeformte schwalbenschwanzförmige Feder dar. Weitere vorteilhafte Anreihungsmittel stellen an einer Seitenwand des Gegenkontaktteilmoduls, also beispielsweise eines ISO 7816-Gegenkontaktmoduls angeformte Paßstifte dar, die in Paßbohrungen in einer gegenüberliegende Seitenwand des anzureihenden Gegenkontaktteilmoduls eingreifen. Diese ermöglichen eine präzise Ausrichtung der Oberflächen der Teilmodule, so daß diese miteinander fluchten und die Gegenkontakte in einer Ebene parallel zur Oberfläche liegen. Mindestens ein auf der Ober- und oder der Unterseite des Gegenkontaktteilmoduls angeordneter Verriegelungshaken, der in mindestens eine entsprechende Ausnehmung in der Ober- und oder Unterseite eines angereihten weiteren Gegenkontaktteilmoduls eingreift, ermöglicht eine Fixierung und Stabilisierung eines aus Gegenkontaktteilmodulen aufgebauten Gegenkontaktmoduls und damit der Lage der Kontaktreihen und der Kontaktabstände zueinander.

Auf der Oberseite eines Gegenkontaktteilmoduls angeordnete Mittel zur verrastenden Montage von Gegenkontaktelementen, beispielsweise in Form von Rasthaken in Verbindung mit Rastnasen ermöglichen eine leichte Nachrüstbarkeit einzelner Gegenkontaktelemente bei gleichzeitig sicherer und poitionsgenauer Fixierung eingesetzter Gegenkontaktelemente.

### Zeichnungen

Ausführungsbeispiele der Erfindung sind in den Figuren dargestellt und werden im folgenden näher erläutert.

Es zeigen
Figur 1 das Kontaktfeld bzw. die Kontaktflächen einer Chipkarte gemäß ISO 7816-1 und folgende,
Figur 2 eine ISO 7816-Chipkarte mit typisch ausgebildetem Kontaktfeld am Beispiel einer Eurocheque-Karte,
Figur 3 eine Multi-Media-Card mit einer Kontaktflächenanordnung, die an einem real existierenden Exemplar vermessen wurde,
Figur 4 eine Übereinanderprojektion der Kontaktflächen einer ISO 7816-Chipkarte und einer Multi-Media-Card,
Figur 5 eine erfindungsgemäße Kontaktanordnung, die sowohl dem ISO 7816-Standard, als auch dem durch Messung ermittelten MMC-Standard gemäß Figur 3 genügt und somit sowohl mit einem MMC-Leser, als auch einem ISO 7816-Chipkartenleser kontaktierbar ist,
Figur 6 ein Gegenkontaktmodul, das zum Einsatz in einem Chipkartenleser zur alternativen Auswertung von Chipkarten mit unterschiedlichen Kontaktfeldern geeignet ist,
Figur 7 ein aus zwei Teilmodulen zusammengesetztes Gegenkontaktmodul,
Figur 8 einen Schnitt durch ein Teilmodul des Gegenkontaktmoduls gemäß Fig. 7, und
Figur 9 ein drittes Ausführungsbeispiel für ein Gegenkontaktmodul, das ebenfalls aus zwei Teilmodulen zusammensetzbar ist.

### Beschreibung der Ausführungsbeispiele

Chipkarten im Sinne der ISO-Norm 7816 gehören zur Gruppe der Identifikationskarten, wie sie in der Norm ISO 7810 "Identification Cards - Physical Characteristics" definiert sind. Diese Norm spezifiziert die physikalischen Eigenschaften von Identifikationskarten einschließlich der Materialeigenschaften wie Flexibilität, Temperaturbeständigkeit und Abmessungen für drei verschiedene Größen von Karten (ID-1, ID-2 und ID-3). Die Basis für die Chipkartennormen ISO 7816-1 und folgende bildet die ID-1-Karte, wie sie heute vielfach als Karte für den Zahlungsverkehr, z. B. als Kredit- oder Eurochequekarte verbreitet ist.

Eine solche Chipkarte beinhaltet im Kartenkörper eine integrierte Schaltung, die über Elemente zur Datenübertragung, zum Speichern von Daten und zur Verarbeitung von Daten verfügt. Die Datenübertragung kann dabei entweder über die Kontakte an der Oberfläche der Karte erfolgen, oder aber kontaktlos durch elektromagnetische Felder.

Die wesentlichen Eigenschaften und Funktionen von Chipkarten sind in den ISO-Standards der Reihe 7816 festgelegt.

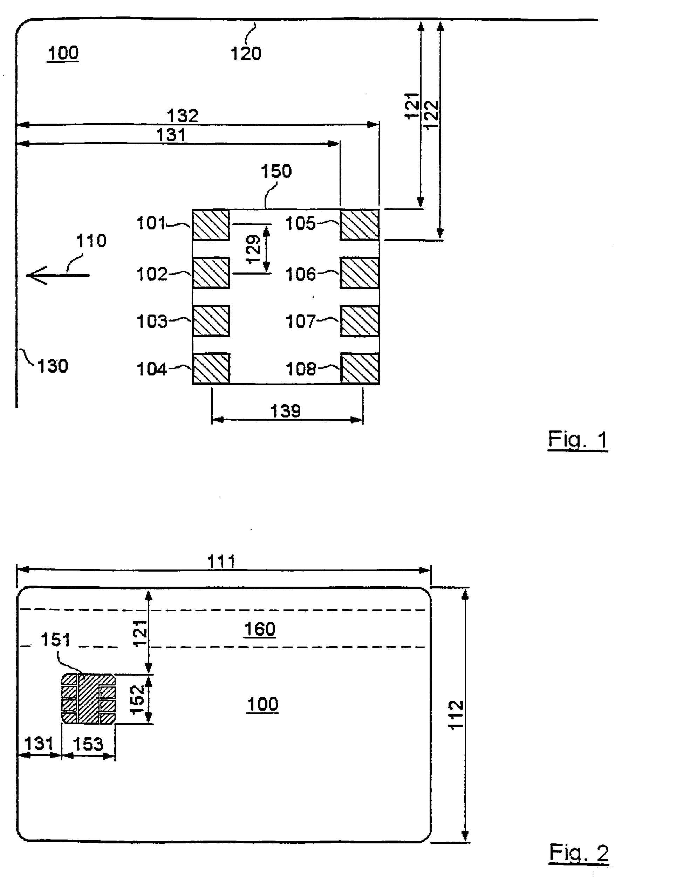

Figur 1 zeigt einen Ausschnitt aus einer Chipkarte 100 gemäß ISO 7816 in der Draufsicht.

Diese verfügt über eine, bezogen auf die Einschubrichtung 110, vordere Kante 130 und eine, in der ISO 7816 als obere Kante bezeichnete, rechte Kante 120, wobei die Lage der Kontaktflächen 101, 102, 103, 104, 105, 106, 107 und 108, die auf der Oberseite der Chipkarte von außen zugänglich angeordnet sind, in der ISO 7816-2 bezüglich der Kanten 120 und 130 angegeben wird.

Die ISO 7816-2 gibt für die Kontaktflächen 101 bis 108 Mindestabmessungen von 1,7 mm x 2,0 mm vor. Die in nachfolgender Tabelle angegebene Abstände 131 der Kontaktflächen 101 bis 108 von der Vorderkante sowie die Abstände 121 der Kontaktflächen von der Oberkante stellen Höchstmaße dar, die Abstände 132 von der Vorderkante und 122 von der Oberkante Mindestmaße.

| Kontaktfläche | Abstand 131 von Vorderkante [mm], max. | Abstand 132 von Vorderkante [mm], min. | Abstand 121 von rechter Kante [mm], max. | Abstand 122 von rechter Kante [mm], min. |
|---|---|---|---|---|
| 101 | 10,25 | 12,25 | 19,23 | 20,93 |
| 102 | 10,25 | 12,25 | 21,77 | 23,47 |
| 103 | 10,25 | 12,25 | 24,31 | 26,01 |
| 104 | 10,25 | 12,25 | 26,85 | 28,55 |
| 105 | 17,87 | 19,87 | 19,23 | 20,93 |
| 106 | 17,87 | 19,87 | 21,77 | 23,47 |
| 107 | 17,87 | 19,87 | 24,31 | 26,01 |
| 108 | 17,87 | 19,87 | 26,85 | 28,55 |

Höchstmaße für die Kontaktflächen sind durch ISO 7816-2 nicht vorgegeben, jedoch muß sichergestellt sein, daß die Kontaktflächen 101 bis 108 voneinander elektrisch isoliert sind.

Wie ohne weiteres ersichtlich, ist durch die Maximalabstände 131 der Kontaktflächen 101 bis 104 und der Mindestabstände 132 der Kontaktflächen 105 bis 108 von der Vorderkante der Chipkarte, sowie der Maximalabstände 121 der Kontaktflächen 101 und 105 und der Mindestabstände 122 der Kontaktflächen 104 und 108 von der Oberkante der Chipkarte 100 ein rechteckförmiger Bereich 150 von 9,62 mm x 9,32 mm definiert, den gemäß ISO 7816 die Kontaktflächen 10I bis 108 mindestens einnehmen müssen. Der Bereich 150 wird im Zusammenhang mit der vorliegenden Erfindung auch als vorgegebener Bereich bezeichnet. Die ISO 7816-2 läßt zu, daß die Kontaktflächen über den vorgegebenen Bereich nach außen hinausragen.

Zwei benachbarte, gemäß ISO 7816-2 vorgegebene Kontaktreihen (Kontaktflächen 101 bis 104 und 105 bis 108) weisen in Einschubrichtung 110 einen Mittenabstand 139 von 7,62 mm, der Mittenabstand 129 zweier benachbarter Kontaktflächen 101 und 102 quer zur Einschubrichtung 110 beträgt 2,54 mm.

Ein konkrektes Ausführungsbeispiel der oben beschriebenen ISO 7816-Chipkarte stellt die in Figur 2 dargestellte Eurocheque-Karte dar, deren Kontaktfeld 151, das sich aus den Kontakten 101 bis 108 zusammensetzt, eine Fläche von ungefähr 11,7 mm (153) in Einschubrichtung und ungefähr 10,5 mm (152) quer zur Einschubrichtung aufweist. Die Abstände 131 der Kontaktflächen 101 bis 104 zur Vorderkante und 121 der Kontaktflächen 101 und 105 zur Oberkante betragen ungefähr 9,0 mm und 18,5 mm.

Die äußeren Abmessungen der dargestellten Eurocheque-Karte im ID-1-Format, die auf ihrer Rückseite als zusätzliches Speichermedium einen Magnetstreifen 160 enthält, betragen in Einschubrichtung ungefähr 85,5 mm (111), quer dazu ungefähr 54,0 mm (112).

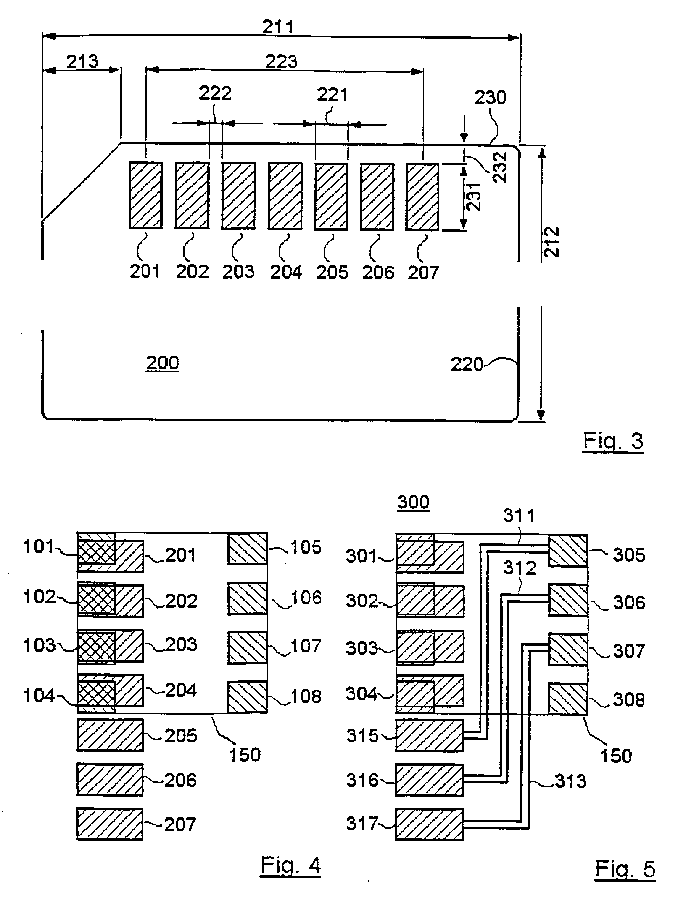

Eine von der Norm 7816 abweichende Chipkarte stellt die in Figur 3 dargestellte Multi-Media-Card 200, kurz MMC, der Firma Siemens dar. Wie bei einer Standardchipkarte ist der Chipträger mit dem eigentlichen Chip als eine Einheit ausgebildet, an deren Oberfläche die Kontaktflächen zur Kontaktierung des Chips angeordnet sind. Der Chipträger, ist ebenfalls wie bei einer Standardchipkarte, in eine entsprechende Aussparung der Karte 200 so eingeklebt, daß die Oberfläche des Chipträgers mit der der MMC-Karte 200 bündig abschließt und die Kontaktflächen an der Oberseite der Karte liegen.

Diese weist äußere Abmessungen von ungefähr 24 mm (211) x 32 mm (212) auf, wobei die in der dargestellten Draufsicht linke obere Ecke mit 4,O mm x 45° abgeschrägt ist. Das im folgenden als erstes Kontaktfeld bezeichnete Kontaktfeld der MMC-Karte ist in Form einer ersten Kontaktreihe mit Kontaktflächen 201, 202, 203, 204, 205, 206 und 207 ausgeführt zur schmalen Vorderseite 230 der Chipkarte einen Abstand 231 von 1,0 mm aufweist. Die Kontaktflächen 201 bis 207 selbst haben Abmessungen von 1,7 mm (221) x 3,5 mm (231) und haben untereinander quer zur Breitseite 220 der MMC-Karte einen Abstand von 0,625 mm.

Wie aus Figur 4, der Übereinanderprojektion der Kontaktfelder einer Chipkarte gemäß ISO 7816 und der MMC-Karte, ohne weiteres zu ersehen, liegen sowohl die Kontaktflächen 101 bis 108 der ISO 7816-Chipkarte, als auch die Kontaktflächen 201 bis 204 der MMC-Karte innerhalb der Abmessungen des vorgegebenen Bereichs 150. Zwar erfüllen die Kontakte 201 bis 204 der MMC-Karte nicht die Vorgaben der Norm ISO 7816-2, jedoch können diese durch geringfügige Verbreiterungen an den ISO 7816-2-Standard angepaßt werden.

Somit liegt eine Überlappung des Kontaktfeldes mit den Kontaktflächen 201 bis 207 der MMC-Karte und des Kontaktfeldes mit den Kontaktflächen 101 bis 108 der ISO 7816-Chipkarte im Bereich der Kontaktflächen 201 bis 204 der MMC-Karte und 101 bis 104 der ISO-Chipkarte vor.

Die Kontaktflächen 205 bis 207 der MMC-Karte liegen außerhalb des vorgegebenen Bereichs 150.

Um nun die Möglichkeit zu schaffen, eine MMC-Karte sowohl mit einem MMC-Kartenleser, als auch einem Chipkartenleser für Chipkarten nach dem ISO 7816-Standard auswerten zu können, wird vorgeschlagen, innerhalb des vorgegebenen Bereichs 150 auf der MMC-Karte eine der Kontaktreihe mit den Kontaktflächen 201 bis 207 benachbarte Kontaktreihe mit den Kontaktflächen 105 bis 108 derart anzuordnen, daß sowohl die Kontaktflächen 201 bis 204 der MMC-Karte durch geringfügige Verbreiterungen an den ISO 7816-Standard angepaßt werden können, als auch die Kontaktflächen 105 bis 108 der entsprechenden Kontaktreihe den Anforderungen des ISO 7816-Standards genügen.

Eine entsprechende erfindungsgemäße, beispielsweise auf einer MMC-Karte realisierte Kontaktanordnung zeigt Figur 5.

Die Kontaktanordnung der Figur 5 umfaßt ein Kontaktfeld mit Kontakten 301 bis 304, die aus einer Überlagerung der Kontaktflächen 101 bis 104 gemäß ISO 7816-2 und 201 bis 204 der MMC-Karte hervorgehen, und die im Bereich des durch ISO 7816-2 vorgegebenen Bereichs 150 sowohl den Anforderungen der ISO 7816-2, als auch den Anforderungen an MMC-Karten-Kontaktflächen entsprechen. Weiterhin ist ein Kontaktfeld mit Kontaktflächen 305 bis 308 vorgesehen, das ebenfalls den Anforderungen der ISO 7816-2 hinsichtlich ihrer Lage genügt. Die außerhalb des vorgegebenen Bereichs 150 liegenden Kontaktflächen 205, 206 und 207 der MMC-Karte sind unverändert übernommen (Kontaktflächen 315, 316 und 317) und ermöglichen somit weiterhin die Auswertung der MMC-Karte mittels eines MMC-Kartenlesers. Zur gleichzeitigen Auswertbarkeit der solchermaßen modifizierten MMC-Karte mit einem ISO-Kartenleser sind die außerhalb des vorgegebenen Bereichs 150 liegenden Kontaktflächen 315 bis 317 über Leiterbahnen 311, 312, 313 mit den Kontaktflächen 305, 306, 307 oder 308 verbunden. Somit sind sämtliche Kontakte des MMC-Moduls über MMC- wie ISO 7816-2-kompatible Kontaktflächen kontaktierbar.

Die Leiterbahnen sind an der Oberfläche der Chipkarte 200 bzw. des Chipträgers entlang geführt.

Das oben beschriebene Ausführungsbeispiel bezieht sich auf eine modifizierte Kontaktanordnung für MMC-Module. Ebenso ist es aber auch denkbar, die in Figur 5 dargestellte und oben beschriebene Kontaktanordnung beispielsweise auf einer Chipkarte nach ISO 7816 vorzusehen. Damit ist auch eine ISO-7816-Chipkarte sowohl für ISO-7816-Chipkartenleser, als auch MMC-Kartenleser auswertbar.

Weiterhin ist die Erfindung auch nicht auf die Herstellung einer Kompatibilität zwischen dem ISO 7816-Standard und MMC beschränkt. Vielmehr ermöglicht die Erfindung durch geeignete Anordnung eines zweiten Kontaktfeldes innerhalb eines durch einen Standard, wie beispielsweise ISO 7816, vorgegebenen Bereichs eine Anpassung verschiedenartiger Kontaktanordnungen an den Standard. Eine Beschränkung ergibt sich dabei allenfalls durch unterschiedliche Kontaktanzahlen, also beispielsweise dann, wenn die anzupassende Kontaktanordnung mehr belegte Kontakte aufweist, als die standardgemäße Kontaktanordnung.

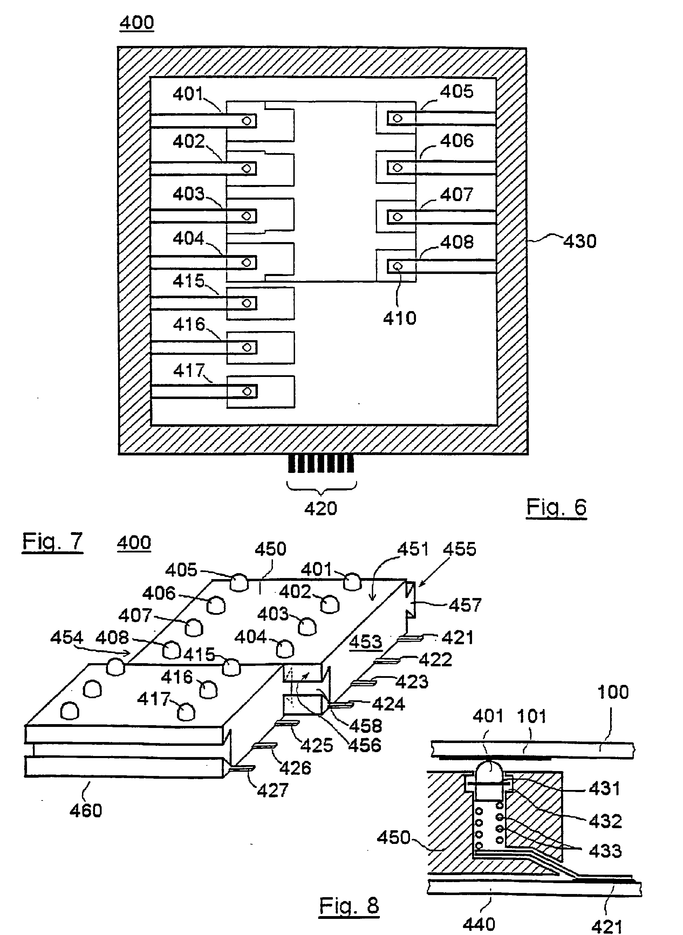

Figur 6 zeigt beispielhaft ein Gegenkontaktmodul 400 mit Gegenkontakten 401 bis 408 und 415 bis 417 vor dem Hintergrund einer erfindungsgemäßen Kontaktanordnung 300, die zur alternativen Auswertung mittels eines ISO 7816- bzw. eines MMC-Chipkartenlesers angepaßt ist.

Jeder Kontaktfläche 301 bis 308 des ISO 7816-Kontaktfeldes ist dabei ein eigener Gegenkontakt 401, 402, 403, 404, 405, 406, 407 und 408 des Gegenkontaktmoduls 400 zugeordnet. Darüber hinaus verfügt das Gegenkontaktmodul 400 auch über weitere Kontakte 415, 416 und 417, die den Kontaktflächen 315, 316 und 317 des MMC-Kontaktfeldes zugeordnet sind.

Hinsichtlich der Ausrichtung der Gegenkontakte zueinander gelten die gleichen Anforderungen, wie an die erfindungsgemäße Kontaktanordnung 300.

Die Gegenkontakte 401 bis 408 und 415 bis 417 sind in Form metallischer Blattfedern ausgeführt, die an ihren den Kontaktflächen zugewandten Unterseiten Kontaktperlen 410 zur Kontaktierung der Kontaktflächen 301 bis 308 und 315 bis 317 aufweisen.

Die Gegenkontakte sind in einem Träger, im vorliegenden Fall in einem rahmenförmigen Kunstoffträger 430 befestigt. Außerdem sind in dem Rahmen 430 Leiterbahnen verlegt, die eine elektrische Verbindung zwischen den Gegenkontakten und einem Anschlußstecker herstellen.

Das beschriebene Gegenkontaktmodul ist damit zum Einsatz in einem Chipkartenleser zur alternativen Auswertung von Chipkarten mit unterschiedlichen Kontaktfeldern, beispielsweise von ISO 7816-, ebenso wie MMC-Chipkarten geeignet. Durch eine entsprechende Anpassung der Anordnung der Gegenkontakte innerhalb des Gegenkontaktmoduls, sowie der Anzahl der im Modul enthaltenen Gegenkontakte ist eine Anpassung an weitere Kontaktfelder möglich.

Ein Gegenkontaktmodul ist in den Figuren 7 und 8 dargestellt. Das Gegenkontaktmodul 400 besteht in diesem Fall aus aneinander anreihbaren Teilmodulen 450 und 460. Die Teilmodule 450 und 460 weisen im wesentlichen quaderförmige Körper mit einer Oberseite 451 und Seitenflächen 453, 454, 455 und 456 auf. Aus der Oberseite 451 des ersten Teilmoduls 450 ragen zwei Gegenkontaktreihen mit Gegenkontakten 401 bis 408 zur Kontaktierung der Kontaktflächen einer ISO-7816-Chipkarte hervor, deren Anordnung zueinander dazu den Vorgaben der ISO 7816 genügt. Die Gegenkontakte 401 bis 404 sind mit Lötanschlüssen 421, 422, 423, 424 verbunden, die aus dar parallel zur ersten Gegenkontaktreihe 401 bis 404 stehenden Seitenwand 453 herausgeführt sind. Ebenso sind die Gegenkontakte 405 bis 408 der zweiten Gegenkontaktreihe 405 bis 408, mit einer zweiten Reihe in der Figur nicht dargestellter Lötanschlüsse verbunden, die aus der der ersten Seitenwand 453 gegenüberliegenden zweiten Seitenwand 454 herausgeführt sind.

Das zweite Teilmodul 460 weist, wie das erste Teilmodul 450, Gegenkontakte 415, 416 und 417 zur Kontaktierung der weiteren Kontaktflächen 205, 206 und 207 eines MMC-Moduls oder 315, 316 und 317 einer an das MMC-Format angepaßten Kontaktanordnung einer ISO-7816-Chipkarte auf. Diese sind ebenso, wie beim ersten Teilmodul, mit aus der ersten Seitenfläche 453 des Gegenkontaktmodulkörpers herausgeführten Anschlüssen 425, 426 und 427 verbunden.

Eine dritte Seitenwand 455 und eine vierte Seitenwand 456 des quaderförmigen Gegenkontaktmodulkörpers weisen Mittel zur Aneinanderreihung von Gegenkontaktmodulen, beispielsweise der Ergänzung des ersten Gegenkontaktmoduls 450 durch eine zweites Gegenkontaktmodul 460 zur Bildung eines Gegenkontaktmoduls 400 zur Kontaktierung sowohl von ISO-7816-Chipkarten, als auch von MMC-Karten, auf. Diese sind beim vorliegenden Ausführungsbeispiel in Form einer aus der vierten Seitenwand 456 des ersten Teilmoduls 450 herausgefrästen schwalbenschwanzförmigen Nut 458 und einer an der dritten Seitenwand 455 des zweiten Teilmoduls 460 angeformten schwalbenschwanzförmigen Feder 457 ausgeführt, so daß die beiden Teilmodule durch Einführen der schwalbenschwanzförmigen Feder 457 des zweiten Teilmoduls 460 in die schwalbenschwanzförmige Nut 458 des ersten Teilmoduls 450 aneinander anreihbar sind. Zur Anreihung weiterer Teilmodule weist beim vorliegenden Ausfürhungsbeispiel das erste Teilmodul an seiner dritten Seitenfläche eine weitere schwalbenschwanzförmige Feder 457, das zweite Teilmodul 460 an seiner vierten Seitenfläche 456 eine weitere schwalbenschwanzförmige Nut 458 auf. Die Abmessungen der Teilmodulkörper, insbesondere die Lage der Gegenkontakte 401 bis 408 und 415 bis 417 relativ zur dritten und vierten Seitenfläche, sind so dimensioniert, daß ein aus an die vierte Seitenfläche 456 des ersten Teilmoduls 450 angereihtes zweites Teilmodul 460 gebildetes Gegenkontaktmodul 400 zur Kontaktierung sowohl von ISO-7816-Kontaktanordnungen, als auch von MMC-Kontaktanordnungen geeignet ist, insbesondere die durch die ISO 7816 und den MMC-Standard vorgegebenen Kontaktabstände eingehalten werden.

Figur 8 zeigt einen Schnitt durch das erste Gegenkontaktteilmodul 450. Der Gegenkontakt 401 ist, wie die übrigen Gegenkontakte 402 bis 408 und auch die Gegenkontakte 415 bis 417 des zweiten Teilmoduls 460, in Form eines federnd gelagerten Stifts ausgeführt. Die Spitze des Gegenkontakts 401 ist zur weitgehend verschleiß- und beschädigungsfreien Kontaktierung einer zugehörigen Kontaktfläche 101 oder 301 abgerundet, oder , wie im vorliegenden Fall, in Form einer Halbkugel ausgeführt. Um den Schaft des stiftförmigen Gegenkontakts 401 ist ein Kranz 431 angeformt, der in einer Nut 432 des Gegenkontaktmodulkörpers geführt ist. Die Anordnung aus Kranz 431 und Nut 432 ermöglicht eine Bewegung des Stifts in zur Moduloberseite 451 senkrechter Richtung und verhindert gleichzeitig ein Herausfallen des Gegenkontaktstifts 401 aus dem Gegenkontaktmodul 450. Um eine sichere Kontaktierung der Kontaktfläche 101 bzw. 301 einer über dem Gegenkontaktmodul 450 befindlichen Chipkarte 100 zu gewährleisten, wird der Gegenkontaktstift 401 durch eine metallische Spiralfeder 433 in Richtung der Oberseite 451 des Gegenkontaktmoduls 450 gedrückt. Die maximale Auslenkung des Stifts 401 ist dabei durch die obere Abdeckung der Nut 432 begrenzt. Das untere Widerlager der Spiralfeder 433 bildet der aus dem Gegenkontaktmodulkörper herausgeführte Lötanschluß 421.

In Figur 8 ist das Gegenkontaktmodul 450 beispielhaft als SMD-(surface mounted device) Bauteil zur Lötmontage auf der Oberfläche einer Leiterplatte 440 dargestellt. Prinzipiell sind selbstverständlich auch andere Bauformen, beispielsweise mit einem Steckanschluß möglich.

Die Gegenkontaktanordnung zur Kontaktierung einer erfindungsgemäßen, einer ISO-7816- oder einer MMC-Kontaktanordnung ist auch in Form von bedarfsabhängig mit Gegenkontakten frei bestückbaren Kontakthalters realisierbar. Dieser könnte beispielsweise in Form des Körpers des Gegenkontaktmoduls 450 ausgeführt sein, der bedarfsabhängig mit Lötanschlüssen 421 bis 427 und Gegenkontakten 401 bis 408 und 415 bis 417 bestückbar ist.

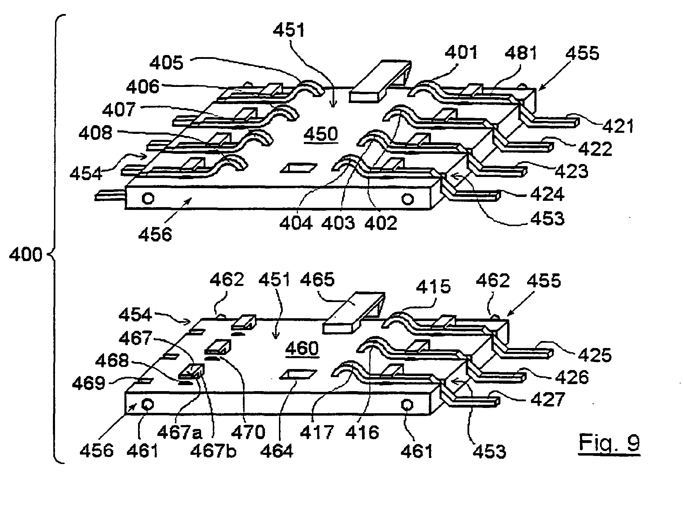

Eine dritte Variante eines Gegenkontaktmoduls 400 zur Kontaktierung sowohl von ISO-7816-Chipkarten, als auch von MMC-Karten ist in Figur 9 dargestellt.

Das Gegenkontaktmodul besteht aus zwei quaderförmigen, aneinander angereihten Teilmodulen 450 und 460, die im wesentlichen gleich aufgebaut sind und sich lediglich in der Anzahl der Gegenkontakte 401 bis 408 und 415 bis 417, oder der auf dem Modulkörper anordenbaren Gegenkontakte unterscheiden.

Zur Aneinanderreihung der Teilmodule 450 und 460 weisen diese an ihrer dritten und vierten Seitenfläche, die zu den Kontaktreihen und den ersten und zweiten Seitenwänden 453 und 454 senkrecht stehen, Anreihungsmittel in Form von Bohrungen 461 an der dritten Seitenwand 453 und Paßstiften 462 an der vierten Seitenwand 454 auf. Die Paßstifte 462 bewirken in Verbindung mit den Paßbohrungen 461 zur Aufnahme der Paßstifte bei Aneinanderreihung der Teilmodule 450 und 460 deren gegenseitige Ausrichtung, so daß die Oberflächen 451 sowie die ersten und die zweiten Seitenflächen der Teilmodule 450 und 460 miteinander fluchten, also jeweils eine gemeinsame Fläche bilden. Weiter umfassen die Mittel zur Aneinanderreihung der Teilmodule Mittel zur Verriegelung der kaskadierten Teilmodule 450 und 460 untereinander. Diese sind in Form jeweils eines auf der Oberseite 451 der Teilmodule 450 und 460 angeordneten Verriegelungshakens 465 ausgebildet, der den Körper des jeweiligen Teilmoduls in Richtung dessen dritter Seitenfläche 455 überragt, und der bei aneinandergereihten und senkrecht zur ersten und zweiten Seitenwand 453 und 454 zueinander ausgerichteten Teilmodulen in eine Ausnehmung 464 in der Oberfläche 451 des jeweils benachbarten Teilmoduls 460 einrastet. Auf diese Weise sind die beiden benachbarten Teilmodule 450 und 460 durch die Verriegelungsmittel 464 und 465 gegeneinander verriegelt. Die Abstände der Kontakte 415 und 404 zueinander sind somit festgelegt.

Die Teilmodule weisen an ihren Oberkanten entlang der ersten und der zweiten Seitenfläche 453 und 454 Aussparungen 469 zur Aufnahme von Gegenkontaktelementen 481 auf. Weiter sind auf der Oberseite der Teilmodule Mittel 467, 468 zur verrastenden Montage der Gegenkontaktelemente 481 angeordnet. Diese sind in Form von winkelförmigen Rasthaken 467 ausgebildet, wobei ein erster Schenkel 467a des Rasthakens, der im wesentlichen parallel zur Oberseite 451 des Teilmoduls 450, 460 angeordnet ist, das Gegenkontaktelement 481 in zur Oberfläche 451 des Teilmoduls senkrechter Richtung führt, während ein zweiter Schenkel 467b des Rasthakens 467 den ersten Schenkel 467a mit der Oberseite des Modulkörpers verbindet und eine seitliche Führung des Gegenkontaktelements 481 entlang der ersten und der zweiten Seitenfläche 453 und 454 des Teilmoduls bewirkt. Die Montagemittel umfassen weiter eine Rastnase 468, die unmittelbar neben dem Rasthaken 467 auf dessen offener Seite auf der Oberfläche 451 des Modulkörpers angeordnet ist. Diese bewirkt eine Führung des Gegenkontaktelements 481 in der dem zweiten Schenkel 467b des Rasthakens 467 entgegengesetzter Richtung. Die Rastnase ist entweder an der Unterseite des ersten Schenkels des Rasthakens 468, oder, wie beim vorliegenden Ausführungsbeispiel, auf der Oberfläche 451 des Modulkörpers angeordnet. Rasthaken 467 und Rastnase 468 bilden somit einen Kanal 470, in den ein Gegenkontaktelement 481 verrastend einsetzbar ist. Die Höhe der Rastnase ist dabei vorzugsweise gegenüber der durch die Dicke des Gegenkontaktelements 181 vorgegebene Höhe des zweiten Schenkels 467b des Rasthakens 467 gering, so daß durch leichtes Aufbiegen des Rasthakens 467 ein Gegenkontaktelement über die Rastnase hinweg in die Öffnung des Rasthakens einschiebbar ist. Gleichzeitig ist die Höhe der Rastnase 468 groß genug gewählt, so daß ein unbeabsichtigtes Herausgleiten des Gegenkontaktelements 481 aus dem Rasthaken vermieden wird.

Die Gegenkontaktelemente 481 sind in Form von gebogenen metallischen Federstreifen aus einem elektrisch gut leitenden Material ausgeführt. Im Bereich der Kontaktflächen des zu kontaktierenden Moduls weisen sie eine halbkreisförmige Aufwölbung auf, die als Gegenkontakt 401 dient. Zum Rand des Modulkörpers 450 hin sind die Federstreifen nach unten, also zur Bodenfläche 452 des Modulkörpers gebogen und gehen dort in Anschlüsse 421, im vorliegenden Fall zur SMD-Leiterplattenmontage, über.

Der Modulkörper kann auch ohne die Rastmittel 467, 468 für die Gegenkontaktelemente 481 ausgeführt sein und dient dann beispielsweise lediglich als Positionierhilfe bei der Montage der Gegenkontaktelemente 481 gemäß den für die erfindungsgemäße Kontaktanordnung entsprechend geltenden Vorgaben und zur Unterstützung der Gegenkontaktelemente 481 entgegen einer durch eine auszuwertenden Chip- oder MMC-Karte auf die Gegenkontakte 401 ausgeübten Andruckkraft.

## Patentansprüche

1. Chipkarte mit einem kartenförmigen Träger, mit einer auf dem kartenförmigen Träger angeordneten Kontaktflächenanordnung, mit einem in dem Träger eingebetteten Mikrochip und mit Kontaktflächen, die mit dem Mikrochip verbunden sind,
wobei die Kontaktflächenanordnung ein erstes, eine Mehrzahl von Kontaktflächen (101 - 108) umfassendes Kontaktfeld, das innerhalb eines vorgegebenen Bereichs (150) liegt, aufweist,
sowie ein zweites, eine Mehrzahl von Kontaktflächen (201 - 207) umfassendes Kontaktfeld aufweist,
wobei zumindest eine Kontaktfläche (205, 206, 207) des zweiten Kontaktfeldes außerhalb des Bereichs (150) liegt,
und eine Anzahl von Kontaktflächen (201 - 204) des zweiten Kontaktfeldes innerhalb des Bereichs (150) liegt,
wobei die außerhalb des vorgegebenen Bereichs (150) angeordneten Kontaktflächen (205 - 207) des zweiten Kontaktfeldes jeweils mit Kontaktflächen (105 -107) des ersten Kontaktfeldes elektrisch verbunden sind,
wobei das erste Kontaktfeld einer Kontaktflächenanordnung gemäß einer ersten Norm entspricht und das zweite Kontaktfeld einer Kontaktflächenanordnung gemäß einer zweiten Norm entspricht,
**dadurch gekennzeichnet,**
**dass** eine Überlappung der innerhalb des Bereichs (150) liegenden Kontaktflächen (201 - 204) des zweiten Kontaktfeldes mit innerhalb des Bereichs (150) liegenden Kontaktflächen (101 - 104) des ersten Kontaktfeldes vorhanden ist,
wobei alle Kontaktflächen (101 - 108, 201 - 207) derart als Chipkartenkontaktierungsflächen für Gegenkontakte eines Chipkartenlesers ausgeführt sind, dass eine Kontaktierung der Kontaktflächen mit einem ersten gemäß der ersten Norm ausgeführten Chipkartenleser als auch mit einem zweiten gemäß der zweiten Norm ausgeführten Chipkartenleser möglich ist.

2. Chipkarte nach Anspruch 1, **dadurch gekennzeichnet, dass** die Kontaktflächen (201 - 207) des zweiten Kontaktfeldes in Form einer ersten Kontaktreihe mit einander benachbarten Kontaktflächen (201 - 207) ausgebildet ist, und dass die Kontaktflächen des ersten Kontaktfeldes (105 - 108) in Form einer zweiten Kontaktreihe ausgebildet sind, die zur ersten Kontaktreihe (201 - 207) benachbart innerhalb des vorgegebenen Bereichs (150) angeordnet ist.

3. Chipkarte nach Anspruch 1 oder 2, **dadurch gekennzeichnet, dass** auf den kartenförmigen Träger ein Prozessor- und/oder Speichermodul angeordnet ist, der mit der Kontaktflächenanordnung versehen ist.

4. Chipkarte nach einem der vorstehenden Ansprüche, **dadurch gekennzeichnet, dass** auf den kartenförmigen Träger ein MMC-Modul angeordnet ist, der mit der Kontaktflächenanordnung versehen ist.

5. Chipkarte nach einem der vorstehenden Ansprüche 1 bis 3, **dadurch gekennzeichnet, dass** die Chipkarte nach ISO 7816 ausgeführt ist.

6. Chipkartenleser mit Gegenkontakten (401-404; 405-408; 415-417) zur Kontaktierung einer Chipkarte mit Kontaktflächen und einem kartenförmigen Träger,
wobei die Gegenkontakte eine erste Gruppe von Gegenkontakten (405-408) und eine zweite Gruppe von Gegenkontakten (401-404) für eine erste Norm umfassen,
**dadurch gekennzeichnet, dass** die zweite Gruppe von Gegenkontakten (401-404) und eine dritte Gruppe von Gegenkontakten (415-417) für eine zweite Norm vorgesehen ist,
und wobei die erste Gruppe von Gegenkontakten (405-408) und die zweite Gruppe von Gegenkontakte (401-404) innerhalb eines vorgegebenen Bereichs (450) liegt, und die dritte Gruppe von Gegenkontakten (415-418) außerhalb des vorgegebenen Bereichs (450) liegt,
so dass die Gegenkontakte (401-404) der zweiten Gruppe für beide Normen einsetzbar sind.

7. Chipkartenleser nach Anspruch 6, **dadurch gekennzeichnet, dass** dieser ein Gegenkontaktmodul (400) umfasst, und dieser Teilmodule (450, 460) umfasst und aus diesen zusammensetzbar ist.

8. Chipkartenleser nach Anspruch 6 oder 7, **gekennzeichnet durch** Mittel (467, 468) zur verrastenden Montage mindestens eines einen Gegenkontakt (401) umfassenden Gegenkontaktelements (481).

9. Chipkartenleser nach einem der Ansprüche 6 bis 8, **dadurch gekennzeichnet, dass** ein Gegenkontaktmodul mit Gegenkontakte vorhanden ist, wobei jeder der Gegenkontakte (401, ...) mit jeweils einem Lötanschluss (421, ...) zur Leiterplattenmontage versehen ist.

10. Chipkartenleser nach einem der Ansprüche 6 bis 9, **dadurch gekennzeichnet, dass** der Chipkartenleser ein Gegenkontaktteilmodul (450) zur Bildung des Gegenkontaktmoduls umfasst, und das Gegenkontaktteilmodul (450) Mittel (457,458; 461, 462; 464, 465) zur Anreihung' mindestens eines weiteren Gegenkontaktteilmoduls (460) umfasst.

11. Chipkartenleser nach Anspruch 10, **dadurch gekennzeichnet, dass** ein Gegenkontaktteilmodul (450) vorhanden ist und das Gegenkontaktteilmodul (450) mit Anreihungsmittel in Form einer schwalbenschwanzförmigen Nut (458) an einer vierten Seitenwand (456) des anzureihenden weiteren Gegenkontaktteilmoduls (460) und eine zur schwalbenschwanzförmigen Nut (458) passgenaue schwalbenschwanzförmige Feder (457) an einer dritten Seitenwand (455) des Gegenkontaktteilmoduls (450) ausgebildet ist.

12. Chipkartenleser nach Anspruch 11, **dadurch gekennzeichnet, dass** das Gegenkontaktteilmodul (450) mit Anreihungsmittel in Form mindestens einer, vorzugsweise zweier Passbohrungen (461) in einer vierten Seitenwand (456) des anzureihenden weiteren Moduls (460) und an einer dritten Seitenwand (455) des Gegenkontaktteilmoduls (450) angeordnete Passstifte (462) zum Eingriff in die Passbohrungen (461) versehen ist.

13. Chipkartenleser nach einem der Ansprüche 9 bis 12, **dadurch gekennzeichnet, dass** das Gegenkontaktteilmodul (450) mit Mitteln (464, 465) zur gegenseitigen Verriegelunganeinander angereihter Gegenkontaktteilelemente (450, 460) versehen ist.

14. Chipkartenleser nach Anspruch 13, **dadurch gekennzeichnet, dass** das Gegenkontaktteilmodul (450) mit Verriegelungsmitteln in Form eines auf der Oberseite (451) und/oder Unterseite des Gegenkontaktteilmoduls (450) angeordneten Verriegelungshakens (465), der in eine Aussparung in der Oberseite (451) eines angereihten weiteren Gegenkontaktteilmoduls (460) eingreift, versehen ist.

## Claims

1. Smart card having a card-like carrier, having a contact area arrangement which is arranged on the card-like carrier, having a microchip which is embedded in the carrier, and having contact areas which are connected to the microchip,
with the contact area arrangement having a first contact zone which comprises a plurality of contact areas (101-108) and is situated within a predefined region (150),
and also having a second contact zone which comprises a plurality of contact areas (201-207),
with at least one contact area (205, 206, 207) of the second contact zone being situated outside the region (150),
and a number of contact areas (201-204) of the second contact zone being situated within the region (150),
with the contact areas (205-207) of the second contact zone which are arranged outside the predefined region (150) in each case being electrically connected to contact areas (105-107) of the first contact zone,
with the first contact zone corresponding to a contact area arrangement according to a first standard and the second contact zone corresponding to a contact area arrangement according to a second standard,
**characterized**
**in that** there is an overlap between the contact areas (201-204), which are situated within the region (150), of the second contact zone and contact areas (101-104), which are situated within the region (150), of the first contact zone,
with all the contact areas (101-108, 201-207) being designed in the form of smart card contact-making areas for mating contacts of a smart card reader in such a way that it is possible for a first smart card reader, which is designed according to the first standard, and for a second smart card reader, which is designed according to the second standard, to make contact with the contact areas.

2. Smart card according to Claim 1, **characterized in that** the contact areas (201-207) of the second contact zone are in the form of a first row of contacts with mutually adjacent contact areas (201-207), and **in that** the contact areas (105-108) of the first contact zone are in the form of a second row of contacts which is arranged adjacent to the first row of contacts (201-207) within the predefined region (150).

3. Smart card according to Claim 1 or 2, **characterized in that** a processor and/or memory module, which is provided with the contact area arrangement, is arranged on the card-like carrier.

4. Smart card according to one of the preceding claims, **characterized in that** an MMC module, which is provided with the contact area arrangement, is arranged on the card-like carrier.

5. Smart card according to one of the preceding Claims 1 to 3, **characterized in that** the smart card is designed in accordance with ISO 7816.

6. Smart card reader having mating contacts (401-404; 405-408; 415-417) for making contact with a smart card having contact areas and a card-like carrier,
with the mating contacts comprising a first group of mating contacts (405-408) and a second group of mating contacts (401-404) for a first standard,
**characterized in that** the second group of mating contacts (401-404) and a third group of mating contacts (415-417) are provided for a second standard,
and with the first group of mating contacts (405-408) and the second group of mating contacts (401-404) being situated within a predefined region (450), and the third group of mating contacts (415-418) being situated outside the predefined region (450),
and therefore it being possible for the mating contacts (401-404) of the second group to be used for both standards.

7. Smart card reader according to Claim 6, **characterized in that** it comprises a mating contact module (400), and this mating contact module comprises sub-modules (450, 460) and can be composed of these sub-modules.

8. Smart card reader according to Claim 6 or 7, **characterized by** means (467, 468) for mounting at least one mating contact element (481), which comprises a mating contact (401), in a latching manner.

9. Smart card reader according to one of Claims 6 to 8, **characterized in that** a mating contact module having mating contacts is present, with each of the mating contacts (401, ...) having in each case one solder connection (421, ...) for mounting on a printed circuit board.

10. Smart card reader according to one of Claims 6 to 9, **characterized in that** the smart card reader comprises a mating contact sub-module (450) for forming the mating contact module, and the mating contact sub-module (450) comprises means (457, 458; 461, 462; 464, 465) for connecting at least one further mating contact sub-module (460).

11. Smart card reader according to Claim 10, **characterized in that** a mating contact sub-module (450) is present, and the mating contact sub-module (450) is formed with connecting means in the form of a dovetail-like groove (458) on a fourth side wall (456) of the further mating contact sub-module (460) which is to be connected, and a dovetail-like spring (457), which is matched exactly to the dovetail-like groove (458), on a third side wall (455) of the mating contact sub-module (450).

12. Smart card reader according to Claim 11, **characterized in that** the mating contact sub-module (450) is provided with connecting means in the form of at least one fitting hole (461), preferably two fitting holes (461), in a fourth side wall (456) of the further module (460) which is to be connected, and fitting pins (462), which are arranged on a third side wall (455) of the mating contact sub-module (450), for engaging in the fitting holes (461).

13. Smart card reader according to one of Claims 9 to 12, **characterized in that** the mating contact sub-module (450) is provided with means (464, 465) for mutually locking mating contact sub-elements (450, 460) which are connected one another.

14. Smart card reader according to Claim 13, **characterized in that** the mating contact sub-module (450) is provided with locking means in the form of a locking hook (465) which is arranged on the upper face (451) and/or lower face of the mating contact sub-module (450) and engages in a cutout in the upper face (451) of a connected further mating contact sub-module (460).

## Revendications

1. Carte à puce dotée d'un support en forme de carte et d'un système de surfaces de contact disposé sur le support en forme de carte et doté d'une micropuce incorporée dans le support et de surfaces de contact reliées à la micropuce,
le système de surfaces de contact présentant une première zone de contact qui comprend plusieurs surfaces de contact (101 - 108) et qui est située à l'intérieur d'une partie prédéterminée (150) et une deuxième zone de contact qui comprend plusieurs surfaces de contact (201 - 207),
au moins une surface de contact (205, 206, 207) de la deuxième zone de contact étant située à l'extérieur de la partie (150) et plusieurs zones de contact (201 - 204) de la deuxième zone de contact étant situées à l'intérieur de la partie (150),
chacune des surfaces de contact (205 - 207) disposées dans la deuxième zone de contact à l'extérieur de la partie prédéterminée (150) étant reliée électriquement à des surfaces de contact (105 - 107) de la première zone de contact,
la première zone de contact correspondant à un système de surfaces de contact selon une première norme et la deuxième zone de contact à un système de surfaces de contact selon une deuxième norme,
**caractérisée**
**en ce qu'**une superposition des surfaces de contact (201 - 204) disposées dans la deuxième zone de contact à l'intérieur de la partie (150) étant prévue avec des surfaces de contact (101 - 104) disposées dans la première zone de contact à l'intérieur de la zone (150) et
**en ce que** toutes les surfaces de contact (101 - 108, 201 - 207) sont réalisées sous la forme de surfaces de mise en contact de cartes à puce avec des contre-contacts d'un lecteur de carte à puce, ce qui permet une mise en contact des surfaces de contact avec un premier lecteur de carte à puce réalisé selon la première norme et avec un deuxième lecteur de carte à puce réalisé selon la deuxième norme.

2. Carte à puce selon la revendication 1, **caractérisée en ce que** les surfaces de contact (201 - 207) de la deuxième zone de contact sont configurées sous la forme d'une première rangée de contacts qui présente des surfaces de contact (201 - 207) voisines les unes des autres et **en ce que** les surfaces de contact (105 - 108) de la première zone de contact sont réalisées sous la forme d'une deuxième rangée de contacts disposée au voisinage de la première rangée de contacts (201 - 207) à l'intérieur de la partie prédéterminée (150).

3. Carte à puce selon la revendication 1 ou 2, **caractérisée en ce qu'**un module de processeur et/ou de mémoire doté du système de surfaces de contact est disposé sur le support en forme de carte.

4. Carte à puce selon l'une des revendications précédentes, **caractérisée en ce qu'**un module MMC doté du système de surfaces de contact est disposé sur le support en forme de carte.

5. Carte à puce selon l'une des revendications 1 à 3 qui précèdent, **caractérisée en ce que** la carte à puce est réalisée conformément à la norme ISO 7816.

6. Lecteur de carte à puce doté de contre-contacts (401 - 404; 405 - 408; 415 - 417) qui assurent la mise en contact d'une carte à puce dotée de surfaces de contact avec un support en forme de carte,
les contre-contacts comprenant un premier groupe de contre-contacts (405 - 408) et un deuxième groupe de contre-contacts (401 - 404) prévus selon une première norme,
**caractérisée**
**en ce que** le deuxième groupe de contre-contacts (401 - 404) et un troisième groupe de contre-contacts (415 - 417) sont prévus selon une deuxième norme,
**en ce que** le premier groupe de contre-contacts (405 - 408) et le deuxième groupe de contre-contacts (401 - 404) sont situés à l'intérieur d'une partie prédéterminée (450) et en ce que le troisième groupe de contre-contacts (415 - 418) est situé à l'extérieur de la partie prédéterminée (450),
de sorte que les contre-contacts (401 - 404) du deuxième groupe peuvent être utilisés pour les deux normes.

7. Carte à puce selon la revendication 6, **caractérisée en ce qu'**elle comprend un module (400) de contre-contacts et **en ce que** ce dernier comprend des modules partiels (450, 460) et peut être constitué de l'assemblage de ces derniers.

8. Carte à puce selon la revendication 6 ou 7, **caractérisée par** des moyens (467, 468) de montage par encliquetage d'au moins un élément de contre-contact (481) qui comprend un contre-contact (401).

9. Carte à puce selon l'une des revendications 6 à 8, **caractérisée en ce qu'**elle présente un module de contre-contacts présentant des contre-contacts, chacun des contre-contacts (401, ...) étant doté d'un raccordement brasé (421, ...) respectif en vue du montage de la carte de circuit.

10. Carte à puce selon l'une des revendications 6 à 9, **caractérisée en ce que** le lecteur de carte à puce comporte un module partiel (450) de contre-contacts qui forme le module de contre-contacts et **en ce que** le module partiel (450) de contre-contacts comporte des moyens (457, 458; 461, 462; 464, 465) qui permettent de ranger au moins un autre module partiel (460) de contre-contacts.

11. Carte à puce selon la revendication 10, **caractérisée en ce qu'**un module partiel (450) de contre-contacts est prévu et **en ce que** le module partiel (450) de contre-contacts est configuré avec des moyens de rangement qui présentent la forme d'une rainure (458) en queue d'aronde sur une quatrième paroi latérale (456) de l'autre module partiel (460) de contre-contacts à ranger et **en ce qu'**un ressort (457) en queue d'aronde adapté avec précision à la rainure (458) en queue d'aronde est configuré sur une troisième paroi latérale (455) du module partiel (450) de contre-contacts.

12. Carte à puce selon la revendication 11, **caractérisée en ce que** le module partiel (450) de contre-contacts est doté de moyens de rangement qui présentent la forme d'au moins un et de préférence de deux alésages ajustés (461) ménagés dans une quatrième paroi latérale (456) de l'autre module (460) à ranger et de tiges d'adaptation (462) qui s'engagent dans les alésages ajustés (461) et disposées sur une troisième paroi latérale (455) du module partiel (450) de contre-contacts.

13. Carte à puce selon l'une des revendications 9 à 12, **caractérisée en ce que** le module partiel (450) de contre-contacts est doté de moyens (464, 465) pour verrouiller mutuellement des éléments partiels (450, 460) de contre-contacts rangés les uns contre les autres.

14. Carte à puce selon la revendication 13, **caractérisée en ce que** le module partiel (450) de contre-contacts est doté de moyens de verrouillage qui présentent la forme d'un crochet de verrouillage (465) disposé sur le côté supérieur (451) et/ou sur le côté inférieur du module partiel (450) de contre-contacts et qui s'engagent dans une découpe ménagée dans le côté supérieur (451) d'un autre module partiel (460) de contre-contacts qui y est rangé.
